(19) Europäisches Patentamt
European Patent Office
Office européen des brevets

(11) **EP 3 544 173 B1**

(12) **EUROPÄISCHE PATENTSCHRIFT**

(45) Veröffentlichungstag und Bekanntmachung des Hinweises auf die Patenterteilung:
**10.11.2021   Patentblatt 2021/45**

(51) Int Cl.:
**H02P 6/185** *(2016.01)*

(21) Anmeldenummer: **19160302.6**

(22) Anmeldetag: **01.03.2019**

(54) **VERFAHREN UND VORRICHTUNG ZUM ERMITTELN EINER LÄUFERLAGE  EINES LÄUFERS EINER ELEKTRONISCH KOMMUTIERTEN ELEKTRISCHEN MASCHINE**

METHOD AND DEVICE FOR DETERMINING OF A ROTOR POSITION OF A ROTOR IN AN ELECTRONICALLY COMMUTATED ELECTRIC MACHINE

PROCÉDÉ ET DISPOSITIF DE DÉTERMINATION D'UNE POSITION D'UN ROTOR DANS UNE MACHINE ÉLECTRIQUE À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2018   DE 102018106796**

(43) Veröffentlichungstag der Anmeldung:
**25.09.2019   Patentblatt 2019/39**

(73) Patentinhaber: **Universität des Saarlandes**
**66123 Saarbrücken (DE)**

(72) Erfinder:
• **Grasso, Emanuele**
  **66125 Saarbrücken (DE)**
• **König, Niklas**
  **66265 Heusweiler (DE)**
• **Nienhaus, Matthias**
  **55262 Alzey (DE)**
• **Meri, Daniel**
  **66809 Nalbach (DE)**

(74) Vertreter: **Banse & Steglich**
**Patentanwälte PartmbB**
**Patentanwaltskanzlei**
**Herzog-Heinrich-Straße 23**
**80336 München (DE)**

(56) Entgegenhaltungen:
**DE-A1-102008 064 380**

• **WANG C ET AL: "A Novel Approach for Sensorless Control of PM Machines Down to Zero Speed Without Signal Injection or Special PWM Technique", IEEE TRANSACTIONS ON POWER ELECTRONICS, INSTITUTE OF ELECTRICAL AND ELECTRONICS ENGINEERS, USA, Bd. 19, Nr. 6, 1. November 2004 (2004-11-01), Seiten 1601-1607, XP011121751, ISSN: 0885-8993, DOI: 10.1109/TPEL.2004.836617**
• **AHMED SALMAN ET AL: "Electromagnetic levitation control with sensorless large air gap detection for translational motion application using measured current-ripple slope", IECON 2016 - 42ND ANNUAL CONFERENCE OF THE IEEE INDUSTRIAL ELECTRONICS SOCIETY, IEEE, 23. Oktober 2016 (2016-10-23), Seiten 4275-4280, XP033033620, DOI: 10.1109/IECON.2016.7793418 [gefunden am 2016-12-21]**

**Beschreibung**

Technisches Gebiet,

Die Erfindung betrifft elektromagnetische Aktuatoren, die variabel mithilfe eines Pulsweitenmodulationssignals angesteuert werden. Des Weiteren betrifft die vorliegende Erfindung elektrische Maschinen mit beweglichem Läufer als elektromagnetische Aktuatoren, und insbesondere Verfahren zum sensorlosen Ermitteln einer Läuferlage derartiger elektromechanischer Aktuatoren.

Technischer Hintergrund

Elektromagnetische Aktuatoren, wie beispielsweise elektrische Maschinen, werden durch eine Wechselwirkung von Magnetfeldern angetrieben, die von einem Läufer und von einem Stator bewirkt werden. Dazu werden die Magnetfelder relativ zueinander ausgerichtet. Bei elektrisch kommutierten elektrischen Maschinen wird dabei das Statormagnetfeld abhängig von der Lage des Läufers variiert, um stets eine geeignete Ausrichtung der Magnetfelder zum Antrieb der elektrischen Maschine zu erreichen.

Für einen effizienten Betrieb derartiger elektrischer Maschinen wird eine Information über die Läuferlage benötigt. Neben Verfahren, die Läuferlage mithilfe von geeigneten Lagesensoren zu ermitteln, ist eine Reihe von sensorlosen Verfahren bekannt, die die Läuferlage durch Auswerten von im Betrieb der elektrischen Maschine auftretenden elektrischen Größen bestimmen. Neben dem Back-EMF-Verfahren, das besonders zuverlässig für mittlere und hohe Geschwindigkeiten geeignet ist, eignen sich Anisotropie-basierte Verfahren, die eine läuferlageabhängige Induktivität auswerten, besonders für geringe Geschwindigkeiten oder Stillstand.

Unter den Verfahren, die die Anisotropie der elektrischen Maschine auswerten, sind diejenigen vielversprechend, die Schwankungen des Phasenstroms, so genannte Stromrippel, aufgrund der Pulsweitenmodulationsgetriebenen Leistungsschalter nützen. So stellt die Druckschrift Wang, C.; Xu, L., "A Novel Approach for Sensorless Control of PM Machines Down to Zero Speed Without Signal Injection or Special PWM Technique", IEEE Transactions on Power Electronics, 2004 ein Verfahren gemäß dem Oberbegriff des unabhängigen Anspruchs vor, das verschiedene Formen der Stromrippel auswertet, wenn alle drei Phasen der elektrischen Maschine gleichzeitig angeregt werden und sich die Stromrippel der Phasen gegenseitig beeinflussen. Dabei wird das Induktivitätsverhalten von Synchronmaschinen mit dem Stromrippel in einer dreiphasigen Pulsweitenmodulation modelliert.

Ein anderes Verfahren, das in Paulus, D.; Landsmann, P.; Kennel, R., "Saliency based Sensorless Field-oriented Control for Permanent Magnet Synchronous Machines in the Whole Speed Range", Sensorless Control for Electrical Drives, 2012 beschrieben ist, nutzt eine Strommessung mit einer Überabtastung und einer Softwareberechnung der Ableitung des Stromes. Mithilfe einer doppelten differentiellen Messung können Einflüsse der Back-EMF und des Widerstandseffekts kompensiert werden.

Aus der Druckschrift Ahmed S.; Doan V.-D.; Koseki T., "Electromagnetic Levitation Control with Sensorless Large Air Gap Detection for Translational Motion Application Using Measured Current-Ripple Slope", Industrial Electronics Society (IECON), 2016 ist ein Verfahren zur Positionsbestimmung mit einer Einzelspule in einer H-Brückenkonfiguration bekannt. Dabei wird der Widerstandseffekt berücksichtigt und ein Verfahren aufgezeigt, um den Statorwiderstand zu identifizieren und zu kompensieren.

Weiterhin ist aus Glück, T., "Soft Landing and Self-Sensing Strategies for Electromagnetic Actuators", Dissertation, Shaker Verlag, 2013 bekannt, einen Stromrippel auszuwerten und mit Hilfe der Methode der kleinsten Quadrate die Induktivität und den Widerstand zu bestimmen. Die in dem obigen Stand der Technik beschriebenen Verfahren ermöglichen eine Induktivitätsmessung und eine daraus abgeleitete Lagebestimmung für viele verschiedene Arten von elektrischen Maschinen, ohne dass ein Testsignal, wie z. B. Testpulse, injiziert werden muss. Jedoch haben diese den Nachteil, dass Strommessungen insbesondere für kleine Baugrößen mithilfe von shuntbasierten Messeinrichtungen durchgeführt werden, die ein sehr schlechtes Signal-Rausch-Verhältnis aufweisen.

Weiterhin führt die Messung der Phasenströme und die Ermittlung von deren Gradienten zu rauschbehafteten Sensoren, numerisch instabilen Signalen und zu einem Verlust der Genauigkeit. Zudem erfolgen die Strommessungen überwiegend durch eine Überabtastung von Strommesswerten, was eine Analog/Digital-Wandlung mit hohen Abtastraten und einen Mikrocontroller mit hoher Rechenleistung erforderlich macht.

Darüber hinaus benötigen diese Verfahren eine ausreichend hohe magnetische Anisotropie des Aktuators, die nicht für jeden Aktuatortyp verfügbar ist.

Auch hängt der zu messende Stromrippel stark von der gewählten Pulsweitenmodulationsfrequenz ab. Da die Amplitude der Stromrippel umso höher ist, je geringer die Pulsweitenmodulationsfrequenz ist, kann eine genaue Messung nur bei entsprechend niedrigen Pulsweitenmodulationsfrequenzen erreicht werden. Jedoch führen geringe Pulsweitenmodulationsfrequenzen zu hohen Betriebsgeräuschen, Leistungsverlusten und Drehmomentenschwankungen.

Aus der Druckschrift DE 10 2008 064 380 A1 ist ein Verfahren zur sensorlosen Zustandsschätzung von magnetischen Schwebesystemen, insbesondere Magnetlager, bekannt, bestehend aus folgenden Schritten: Ansteuerung mindestens eines Elektromagneten mittels einer pulsweitenmodulierten (PWM) Spannung, Messung und Auswertung von Strom und Spannung zur Ermittlung von Induktivitätswerten im PWM Auf- und Endladevorgang, Schätzung von Induktivitätswerten sowohl im PWM gesteuerten Aufladevorgang, als auch im PWM gesteuerten Entladevorgang anhand der Summe der kleinsten Fehlerquadrate/Least-Squares, Mittelung von Induktivitätswerten für jede PWM Periode, und Berechnung einer Position eines Objekts relativ zu Elektromagneten anhand gemittelter Induktivitätswerte.

Es ist Aufgabe der vorliegenden Erfindung, ein verbessertes Verfahren zum Bestimmen einer Läuferlage für eine elektrische Maschine zur Verfügung zu stellen, wobei das Verfahren eine höhere Genauigkeit, insbesondere auch bei elektrischen Maschinen mit nicht stark ausgeprägter magnetischer Anisotropie, aufweist und einen geringeren Aufwand für die Hardware-Implementierung der Strommessung erfordert.

Offenbarung der Erfindung

Diese Aufgabe wird durch das Verfahren zum Ermitteln einer Läuferlage eines Läufers einer elektronisch kommutierten elektrischen Maschine gemäß Anspruch 1 sowie durch die Vorrichtung und das System gemäß den nebengeordneten Ansprüchen gelöst.

Weitere Ausgestaltungen sind in den abhängigen Ansprüchen angegeben.

Gemäß einem ersten Aspekt ist ein Verfahren zum Ermitteln einer Läuferlage eines Läufers einer elektronisch kommutierten elektrischen Maschine abhängig von einer Induktivitätsangabe; wobei die Induktivitätsangabe ermittelt wird mit folgenden Schritten:

- Betreiben des elektromagnetischen Aktuators durch Anlegen mindestens eines pulsweitenmodulierten Ansteuersignals an mindestens einem Phasenstrang des elektromagnetischen Aktuators;
- Erfassen eines resultierenden Phasenstromsignals (Phasenstromangabe), das einen Verlauf eines Phasenstroms durch den mindestens einen Phasenstrang angibt; und
- Durchführen einer analogen Integration abhängig vom Phasenstromsignal über eine vorgegebene Integrationszeitdauer, um die Induktivitätsangabe zu erhalten, die eine momentane Induktivität des elektromagnetischen Aktuators angibt.

Eine Idee des obigen Verfahrens besteht darin, für die Ermittlung einer Induktivitätsangabe und damit z.B. einer Läuferlage einer elektrischen Maschine eine zeitliche Integration zu nutzen, durch die zumindest ein Anteil eines Phasenstromsignals für eine Integrationszeitdauer integriert wird. Die Integrationszeitdauer ist so gewählt, dass diese einen Wechsel der aufgrund einer Pulsweitenmodulation an den betreffenden Phasenstrang angelegten Phasenspannung umfasst bzw. beinhaltet. Somit wird das Phasenstromsignal zumindest während eines Teils einer Pulsweitenmodulationsperiode integriert. Dadurch wird der Effekt genutzt, dass bei einem definierten Spannungssprung der Phasenspannung die Steigung von Flanken des Phasenstromsignals durch die Induktivität der elektrischen Maschine beeinflusst ist. Je höher die Induktivität, desto geringer ist die (betragsmäßige) Steigung einer Flanke eines in dem Phasenstromsignal befindlichen Stromrippels, der aufgrund der sprunghaften Änderungen der Phasenspannung bei einer pulsweitenmodulierten Ansteuerung bewirkt wird. Die durch das Ergebnis einer Integration des Phasenstromsignals beschriebene Fläche ist somit stark von der Induktivität abhängig.

Bei Anwendung in einer pulsweitenmodulations-gesteuerten elektrischen Maschine kann die Induktivitätsangabe daher als Maßangabe für die momentane Induktivität des Stators der elektrischen Maschine und damit einer Läuferlage des Läufers der elektrischen Maschine verwendet werden.

Die Integration ermöglicht es, dass so auch sehr geringe Stromsignale erheblich verstärkt werden können, ohne dass sich der Rauschanteil erhöht, da sich die Rauschanteile durch die Integration weitestgehend herausmitteln. Auch kann das Verfahren bei stark verzerrten Stromsignalen verwendet werden.

Die Unempfindlichkeit gegenüber Rauschanteilen oder gegenüber Verzerrungen der Phasenstromsignale ermöglicht, dass sich durch die Integration des Phasenstroms eine genaue Angabe der momentanen Induktivität ergibt. Diese gewährleistet somit, dass die Läuferlage auch in elektrischen Maschinen mit geringen Anisotropien zuverlässig bestimmt werden kann, da bereits geringe Änderungen der Gradienten der Flanken des Phasenstroms erkannt werden können.

Durch den Verstärkungseffekt bei der Integration kann weiterhin die Pulsweitenmodulationsfrequenz erheblich erhöht werden, da die sich gleichermaßen verringernden Stromrippel der Phasenströme in ausreichendem Maße verstärkt werden können. Dadurch können negative Effekte, die durch den Betrieb der elektrischen Maschine mit einer Pulsweitenmodulation bei niedrigen Frequenzen hervorgerufen werden, wie z. B. hohe Betriebsgeräusche und Drehmomentenschwankungen, vermieden werden.

Weiterhin erleichtert das obige Verfahren die Strommessung, da eine Überabtastung des Stromsignals durch entsprechend leistungsfähige Analog-/Digitalwandlung nicht benötigt wird und entsprechend günstige Analog-/Digital-Wandler und/oder Microcontroller verwendet werden können.

Weiterhin kann das Durchführen einer Integration umfassen:

- Filtern des erfassten Phasenstromsignals, um ein Stromrippelsignal zu erhalten;
- Integrieren des Stromrippelsignals über die vorgegebene Integrationszeitdauer, um die Induktivitätsangabe zu erhalten.

Insbesondere kann das Phasenstromsignal oder das Stromrippelsignal vor der Integration so modifiziert werden, vorzugsweise durch eine Pegelwandlung, dass bei dem Integrieren kein Gleichanteil integriert wird.

Weiterhin kann die vorgegebene Integrationszeitdauer vollständig oder teilweise einem oder mehreren Stromänderungsabschnitten entsprechen, die jeweils ein Zeitfenster eines Anstiegs oder Abfalls des Phasenstroms als Reaktion auf einen Sprung der angelegten Phasenspannung entsprechen.

Es kann vorgesehen sein, dass die Integrationszeitdauer einer Pulsweitenmodulationsperiode entspricht oder von dieser abhängt und insbesondere zu einem Zeitpunkt zwischen 0% bis 10% der Pulsweitenmodulationsperiode nach dem Beginn der Pulsweitenmodulationsperiode beginnt und zu einem Zeitpunkt zwischen 0% bis 10% der Pulsweitenmodulationsperiode vor dem Ende der Pulsweitenmodulationsperiode endet.

Weiterhin kann eine Widerstandsangabe mithilfe eines Integrationswerts zu einem Zeitpunkt eines Übergangs zwischen zwei Stromänderungsabschnitten und einem Integrationswert zu einem Ende der Integrationszeitdauer ermittelt werden, wobei die Stromänderungsabschnitte jeweils einem Zeitfenster innerhalb eines Anstiegs oder Abfalls des Phasenstroms als Reaktion auf einen Sprung der angelegten Phasenspannung, insbesondere innerhalb eines Pulsweitenmodulationsperiode, umfassen.

Insbesondere kann die Induktionsangabe durch die Widerstandsangabe des elektromagnetischen Aktuators korrigiert werden.

Gemäß einer Ausführungsform kann das Ermitteln einer momentanen Läuferlage der elektrischen Maschine abhängig von der Induktivitätsangabe mithilfe einer Zuordnungsfunktion erfolgen.

Weiterhin kann das Erfassen des Phasenstromsignals mithilfe eines Messwiderstands durchgeführt werden, wobei eine über dem mindestens einen Messwiderstand abfallende Messspannung als Phasenstromsignal verwendet wird, wobei der Messwiderstand angeordnet ist:

- in Reihe mit dem mindestens einen Phasenstrang;
- in Reihe mit einem Brückenzweig einer den betreffenden Phasenstrang treibenden Leistungstreiberschaltung, oder
- zwischen einer den betreffenden Phasenstrang treibenden Leistungstreiberschaltung und einem Versorgungspotenzial, insbesondere einem niedrigen Versorgungspotenzial.

Gemäß einem weiteren Aspekt ist eine Auswerteeinheit zum Ermitteln einer Läuferlage eines Läufers einer elektronisch kommutierten elektrischen Maschine vorgesehen, wobei die Auswerteeinheit umfasst:

- einen analogen Integrator, der ausgebildet ist, um eine Integration abhängig von einem Phasenstromsignal über eine vorgegebene Integrationszeitdauer durchzuführen, so dass eine Induktivitätsangabe erhalten wird, die eine momentane Induktivität der elektrischen Maschine angibt, wobei das Phasenstromsignal einen Verlauf des Phasenstroms durch mindestens einen Phasenstrang bei einer Ansteuerung des mindestens einen Phasenstrangs mit einem pulsweitenmodulierten Ansteuersignal angibt;
- einen Zuordnungsblock, der ausgebildet ist, um eine momentane Läuferlage der elektrischen Maschine abhängig von der Induktivitätsangabe zu ermitteln.

Ein Zuordnungsblock kann ausgebildet sein, um eine momentane Läuferlage des elektromagnetischen Aktuators abhängig von der Induktivitätsangabe zu ermitteln.

Ferner kann ein Hochpassfilter ausgebildet sein, um die Phasenstromangabe zu filtern, so dass ein Anteil eines mittleren Phasenstroms herausgefiltert wird.

Die Auswerteeinheit kann mit einem Pegelanpassungsblock ausgebildet sein, um vor der Integration eine Pegelanpassung durchzuführen.

Der Integrator ist als ein analoger Integrator ausgebildet. Durch die Verwendung eines analogen zeitkontinuierlichen Integrators kann auf ein Oversampling des Phasenstromsignals verzichtet werden, da lediglich maximal zwei Abtastungen pro Periode des pulsweitenmodulierten Ansteuersignals notwendig sind.

Kurzbeschreibung der Zeichnungen

Ausführungsformen werden nachfolgend anhand der beigefügten Zeichnungen näher erläutert. Es zeigen:

Figur 1          eine schematische Darstellung eines Motorsystems mit einer elektronisch kommutierten elektrischen Maschine und einer Leistungstreiberschaltung;

Figur 2          ein Ersatzschaltbild eines Phasenstrangs der elektrischen Maschine der Figur 1;

Figur 3          einen beispielhaften Verlauf einer Phasenspannung für die Ansteuerung eines Phasenstrangs mit einem Pulsweitenmodulationssignal;

Figur 4          eine schematische Darstellung eines resultierenden Stromrippels bei Ansteuerung eines Phasenstrangs durch die Leistungstreiberschaltung mit dem Pulsweitenmodulationssignal der Figur 3;

Figur 5          eine schematische Darstellung der Auswerteschaltung zum Ermitteln einer Induktivitätsangabe, aus der die momentane Läuferlage abgeleitet wird;

Figur 6a bis 6c   verschiedene Möglichkeiten der Messung eines Phasenstroms in einer H-Brückenschaltung als Teil der Leistungstreiberschaltung;

Figur 7          ein Beispiel für einen Pegelanpassungsblock der Auswerteschaltung;

Figur 8          Signalzeitdiagramme für verschiedene Signale, die zur Messung der Induktivitätsangabe notwendig sind;

Figur 9          eine Darstellung eines resultierenden Integrationssignals für eine Integrationszeitdauer; und

Figur 10         eine schematische Darstellung einer weiteren Auswerteschaltung zum Ermitteln einer Induktivitätsangabe unter Berücksichtigung einer Widerstandsangabe.

Beschreibung von Ausführungsformen

Im Folgenden wird die Bestimmung der Induktivitätsangabe anhand einer elektrischen Maschine als elektromagnetischen Aktuator ausführlich beschrieben.

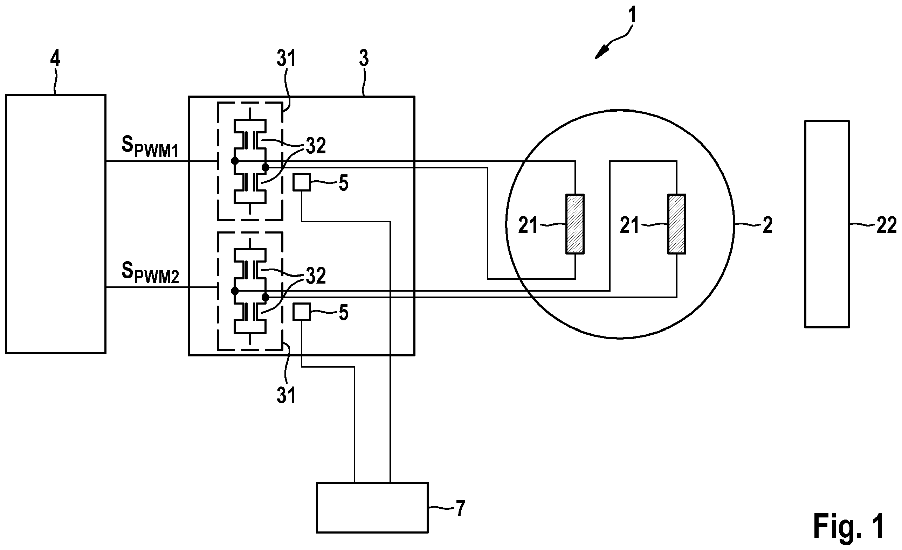

Figur 1 zeigt eine schematische Darstellung eines Motorsystems 1 mit einer elektrischen Maschine 2, die einen oder mehrere separat ansteuerbare Phasenstränge 21 (im vorliegenden Ausführungsbeispiel zwei Phasenstränge) aufweist. Die Phasenstränge 21 sind als Statorspulen an einem Stator der elektrischen Maschine 2 angeordnet. Um bzw. in dem Stator ist ein Läufer 22 angeordnet, der je nach Ausführung der elektrischen Maschine 2 Permanentmagneten oder Kurzschlussspulen zum Bereitstellen eines Erregermagnetfelds bzw. ein ferromagnetisches Material aufweist. Zum geregelten Bereitstellen eines den Läufer 22 antreibenden Statormagnetfelds wird eine Information über eine Läuferlage des Läufers 22 benötigt.

Die Phasenstränge 21 können mithilfe einer Leistungstreiberschaltung 3 angesteuert werden, die für jeden der Phasenstränge 21 eine H-Brückenschaltung 31 aufweisen kann. Alternativ können auch herkömmliche Inverterschaltungen, ein einfacher 1-Quadranten Buck-Converter oder dergleichen zur Ansteuerung der Phasenstränge 21 verwendet werden.

Die H-Brückenschaltungen 31 weisen in an sich bekannter Weise Halbleiterleistungsschalter 32, wie beispielsweise MOSFETs oder dergleichen auf, die mithilfe eines für jeden Phasenstrang 21 von einer Steuereinheit 4 bereitgestellten pulsweitenmodulierten Steuersignals $S_{PWM1}$, $S_{PWM2}$ angesteuert werden. Im Wesentlichen kann die Ansteuerung der Leistungshalbleiterschalter 32 so erfolgen, dass an den Phasenstrang 21 entweder eine positive Versorgungsspannung +UPVDD oder eine negative Versorgungsspannung - UPVDD angelegt wird.

Im Falle einer Leistungstreiberschaltung 3, die zur Ansteuerung eines oder mehrerer Phasenstränge Buck-Converter aufweisen, kann die Ansteuerung der Leistungshalbleiterschalter des Buck-Converters so erfolgen, dass eine positive Versorgungsspannung +$U_{PVDD}$ oder ein Massepotenzial GND an den Phasenstrang 21 angelegt wird.

Die pulsweitenmodulierten Steuersignale $S_{PWM1}$, $S_{PWM2}$ wechseln die an den Phasenstrang 21 angelegte Spannung mindestens einmal während einer vorgegebenen Pulsweitenmodulationsperiode gemäß einem vorgegebenen Tastverhältnis dc, wobei das Tastverhältnis die effektiv an den Phasenstrang 21 angelegte Spannung relativ zur Versorgungsspannung angibt.

Es sind für jeden Phasenstrang 21 Detektorelemente 5 vorgesehen, die geeignet sind, eine den jeweiligen Phasenstrom repräsentierende Angabe (Phasenstromangabe $I_{mess}$) bereitzustellen und diese in einer Auswerteeinheit 7 auszuwerten, um eine Induktivitätsangabe bereitzustellen.

Der Einfachheit halber wird im Folgenden das Verfahren zur Bestimmung der Läuferlage nur anhand einer Phase der elektrischen Maschine erläutert.

Durch die Ansteuerung der Leistungstreiberschaltung 3 mithilfe der pulsweitenmodulierten Steuersignale $S_{PWM1}$, $SP_{WM2}$ ergeben sich Schwankungen im Stromverlauf, die sogenannten Stromrippel, deren Verlauf und Ausprägung jeweils abhängig von der momentanen Induktivität der elektrischen Maschine ist. Da die Induktivität der elektrischen Maschine abhängig von der Läuferlage ist, kann durch Auswertung des Verlaufs der die Stromrippel enthaltenden Phasenstromangabe die Läuferlage abgeleitet werden.

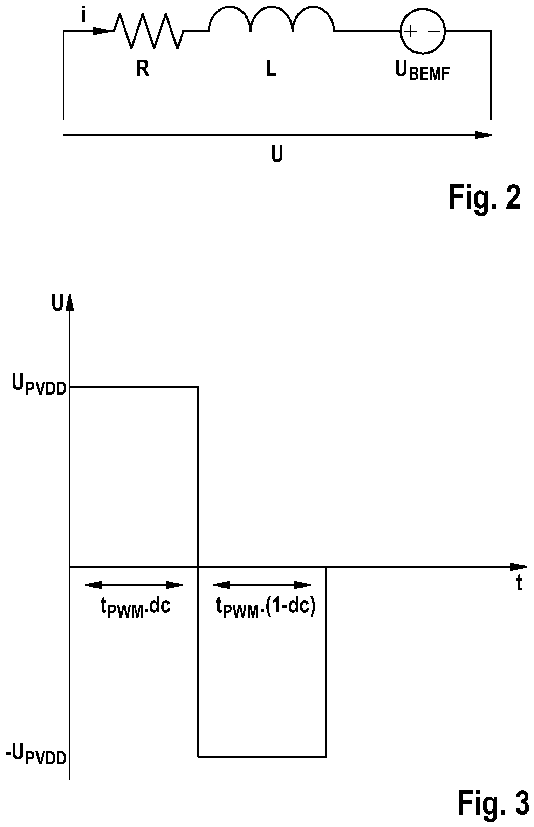

Figur 2 zeigt beispielhaft ein Ersatzschaltbild des betrachteten Phasenstrangs, wobei die Induktivität L, die Back-EMF-Spannung $U_{BEMF}$ und der Gesamtwiderstand R angegeben sind. Das mathematische Modell der Ersatzschaltung entspricht:

$$U = R \cdot i + L \cdot \frac{di}{dt} + U_{BEMF}.$$

Bei niedrigen Geschwindigkeiten bzw. Drehzahlen der elektrischen Maschine kann die Back-EMF-Spannung $U_{BEMF}$ vernachlässigt werden. Der Widerstand des Phasenstrangs 21 kann modelliert werden als:

$$R = R_{DC} + R_{DS,ON} + R_{Losses},$$

wobei $R_{DC}$ dem Spulenwiderstand, $R_{ds,on}$ dem Widerstand der verwendeten Halbleiterleistungsschalter 32, die leitend geschaltet sind, und $R_{Losses}$ den Hochfrequenzverlusten innerhalb der Spule(n) des betreffenden Phasenstrangs 21 entsprechen.

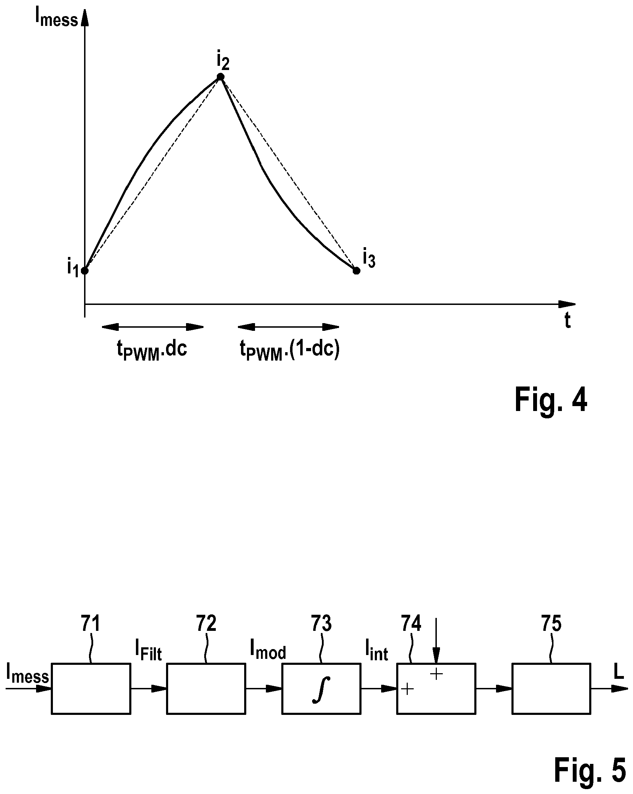

Für eine beispielhafte pulsweitenmodulierte Ansteuerung der Leistungstreiberschaltung 3, wie sie in Figur 3 dargestellt ist, ergibt sich ein resultierender Stromrippel, wie er in Figur 4 dargestellt ist. Für eine Spannungsversorgung U ergibt sich über der Zeit folgender Phasenstromverlauf:

$$i(t) = \left(\frac{U - U_{BEMF}}{R}\right) + \left(i_{DC} - \frac{U - U_{BEMF}}{R}\right) e^{-\frac{R}{L}t}$$

mit der Anfangsbedingung $i_{dc}$, die dem Gleichanteil des Stromes durch die Spule(n) des betreffenden Phasenstrangs 21 entspricht. Durch Anlegen des Spannungsverlaufs aus Figur 3 und anschließendem Umformen erhält man einen Gleichstromanteil und einen Stromrippel, dessen Amplitude durch die Versorgungsspannung UPVDD, die Back-EMF-Spannung $U_{BEMF}$ und den tatsächlichen Gleichstrom durch die Spule $i_{dc}$ bestimmt ist. Die Trajektorie des Gesamtstroms für die gesamte Pulsweitenmodulationsperiode entspricht:

$$i(t) = i_{DC} + \left(\frac{U_{PVDD} - U_{BEMF}}{R} - i_{DC}\right) \cdot \left(1 - e^{-\frac{R}{L}t}\right) \; for \; 0 \leq t \leq t_{PWM} \cdot dc$$

$$i(t) = i_{A} + \left(\frac{-U_{PVDD} - U_{BEMF}}{R} - i_{A}\right) \cdot \left(1 - e^{-\frac{R}{L}(t - t_{pwm} \cdot dc)}\right) \; for \; t_{PWM} \cdot dc \leq t \leq t_{PWM}$$

$$with \; i_{A} = i_{DC} + \left(\frac{U_{PVDD} - U_{BEMF}}{R} - i_{DC}\right) \cdot \left(1 - e^{-\frac{R}{L}t_{pwm} \cdot dc}\right)$$

wobei man durch Näherung mithilfe $e^x \approx 1 + x$. erhalten kann:

$$i(t) = i_{DC} + \left(\frac{U_{PVDD} - U_{BEMF}}{R} - i_{DC}\right) \cdot \frac{R}{L} \cdot t \; for \; 0 \le t \le t_{PWM} \cdot dc$$

$$i(t) = i_A + \left(\frac{-U_{PVDD} - U_{BEMF}}{R} - i_A\right) \cdot \frac{R}{L} \cdot (t - t_{pwm} \cdot dc) \; for \; t_{PWM} \cdot dc \le t \le t_{PWM}$$

$$with \; i_A = i_{DC} + \left(\frac{U_{PVDD} - U_{BEMF}}{R} - i_{DC}\right) \cdot \frac{R}{L} \cdot t_{pwm} \cdot dc$$

Hierdurch wird die Berechnung erheblich vereinfacht.

Die Auswerteeinheit 7 ist schematisch in Figur 5 dargestellt. Die Auswerteeinheit 7 weist einen Hochpassfilter 71 auf, der ausgelegt ist, um eine Phasenstromsignal $I_{mess}$ als Phasenstromangabe von dem Detektorelement 5 zu empfangen und den mittleren Phasenstrom, d. h. einen Gleichanteil, herauszufiltern, so dass nur der Signalanteil des Phasenstroms, der dem hochfrequenten Stromrippel entspricht, verbleibt. Das resultierende hochpassgefilterte Phasenstromsignal $I_{Filt}$ ist somit um die Anteile des Spulenwiderstandes, der Back-EMF-Spannung und der Gleichstromkomponente des Phasenstroms bereinigt. Der Hochpassfilter 71 ist als analoger Hochpassfilter ausgeführt.

Das resultierende hochpassgefilterte Phasenstromsignal $I_{Filt}$ wird anschließend einem Pegelanpassungsblock 72 zugeführt, um ein modifiziertes Phasenstromsignal $I_{mod}$ zu erhalten, bei dem eine Pegelanpassung vorgenommen wurde. Diese stellt eine Signalaufbereitung für die nachfolgende Integration dar.

Das modifizierte Phasenstromsignal $I_{mod}$ wird anschließend einem Integrator 73 zugeführt, der vorzugsweise als analoger Integrator 73 mit einer Reset-Möglichkeit ausgebildet ist. Die Verwendung eines analogen Integrators vermeidet eine Überabtastung des Phasenstromsignals, so dass der Auswerteaufwand und die Hardwareanforderungen reduziert werden können. Das integrierte Phasenstromsignal steht dann als Basis für eine Induktivitätsangabe zur Verfügung.

Liegt kein differentieller Operationsverstärker vor, kann die Ausgangsspannung des Integrators 73 negativ sein, und es kann vorgesehen sein, mithilfe eines Summierblocks 74 ein Offset zu addieren, so dass ein stets positiver Wert des integrierten Phasenstromsignals $I_{int}$ bereitgestellt wird, um dieses mit einem herkömmlichen A/D-Wandler, insbesondere einem Mikrocontroller, zu messen.

Am Ausgang des optionalen Summierblocks 74 erhält man eine Induktivitätsangabe L. Die Induktivitätsangabe L gibt eine für die momentane Läuferlage bestehende Induktivität der elektrischen Maschine an. Die Induktivitätsangabe L kann in einem Zuordnungsblock 75 einer Läuferlage zugeordnet werden.

Die Strommessung mithilfe des Detektorelements 5 kann auf verschiedene Arten erfolgen. So ist es einerseits möglich, berührungslose Stromsensoren zu verwenden, die auf einem Hall-Effekt oder einer sonstigen Magnetfeldsensierung basieren. Da diese Detektorelemente in der Regel nur eine begrenzte Genauigkeit und Empfindlichkeit aufweisen, sind diese nur für Hochstromanwendungen anwendbar und daher nicht geeignet für Systeme mit elektrischen Maschinen geringer Baugröße. Andererseits können zur Strommessung shunt-basierte Strommessverfahren verwendet werden.

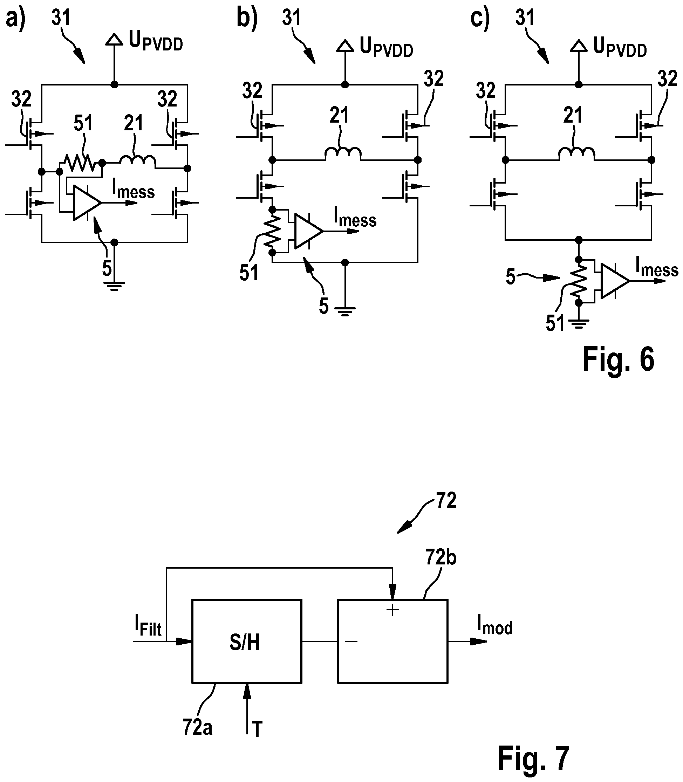

In den Figuren 6a bis 6c sind verschiedene beispielhafte Anordnungen für Messwiderstände 51 des Detektorelements 5 in der Leistungstreiberschaltung 3 dargestellt. Figur 6a zeigt die Anordnung des Messwiderstands des Detektorelements 5 in Reihe zu dem Phasenstrang, so dass durch das Detektorelement 5 unmittelbar der Strom durch den Phasenstrang 21 gemessen werden kann. Jedoch wird für diesen Ansatz ein Operationsverstärker mit einer hohen Gleichtaktunterdrückung benötigt, damit dieser gegen hohe Spannungspotenziale an den Eingängen des Operationsverstärkers geschützt ist und auch bei hohen Spannungspotenzialen entsprechende Differenzspannungen erfassen kann.

Figur 6b zeigt einen Ansatz, den Messwiderstand 51 in einem Brückenzweig der H-Brückenschaltung anzuordnen. Da jedoch der entsprechende Brückenzweig je nach Phase des Pulsweitenmodulationssignals nicht leitend geschaltet ist, kann eine entsprechende Strommessung nur für eine steigende oder fallende Flanke des Stromrippels des Phasenstroms verwendet werden. Alternativ können Messwiderstände in beiden Halbbrücken der H-Brückenschaltung vorgesehen werden.

In der Variante der Figur 6c wird der Messwiderstand 51 zwischen der H-Brückenschaltung 31 und einem niedrigen Versorgungspotenzial angeordnet. Bei dieser Ausführungsform ist jedoch eine Signalauswertung des gemessenen Phasenstromsignals notwendig, da, je nachdem welcher Pull-down-Halbleiterleistungsschalter geöffnet ist, das Phasenstromsignal invertiert werden muss. Dazu kann ein Operationsverstärker zum Auslesen des Spannungssignals über dem Messwiderstand 51 mit einer wechselbaren Polarität verwendet werden, der ggfs. durch das Pulsweitenmodulationssignal gesteuert sein kann.

Nach der Hochpassfilterung weist das gefilterte Phasenstromsignal $I_{filt}$ keinen Offset auf und verläuft im Wesentlichen um die Nulllinie.

Eine nachfolgende Integration eines solchen Signals führt zu einem Wert nahe null, da sich die positiven Anteile und die negativen Anteile gegeneinander aufheben. Dadurch wäre das integrierte Phasenstromsignal $I_{int}$ nur schwierig auszuwerten. Um die Auswertung des Phasenstromsignals $I_{int}$ zu verbessern, sind folgende Varianten möglich:

Es kann auf die Pegelanpassung durch den Pegelanpassungsblock 72 verzichtet werden, wenn lediglich die positiven oder die negativen Bereiche des gefilterten Phasenstromsignals $I_{Filt}$ integriert werden. Entsprechend kann die Integration zu einem Zeitpunkt gestartet werden, zu dem das gefilterte Detektionssignal positiv bzw. negativ wird bzw. endet. Da jedoch die Integrationsdauer von dem Tastverhältnis der Pulsweitenmodulation abhängt, kann aufgrund einer etwaig verkürzten Integrationsdauer die Genauigkeit reduziert sein. Zudem ist die Bestimmung des integrierten Phasenstromsignals als Induktivitätsangabe abhängig von diesem Wert aufwendig, da dieser auch von dem Tastverhältnis abhängt.

Alternativ, wie in Figur 7 dargestellt, kann die Pegelanpassung mithilfe einer Sample-and-Hold-Einheit 72a ausgebildet sein. Die Sample-und-Hold-Einheit 72a wird durch ein externes Triggersignal T aktiviert, das vorzugweise den Beginn jeder Pulsweitenmodulationsperiode angibt oder einen Zeitpunkt kurz nach dem Beginn der Pulsweitenmodulationsperiode angibt. Der abgetastete Wert wird dann in einem Subtrahierblock 72b von dem ursprünglichen gefilterten Phasenstromsignal $I_{Filt}$ subtrahiert, um so den gesamten Stromrippel des gefilterten Phasenstromsignals $I_{Filt}$ auf die Nulllinie zu schieben. Dieses modifizierte Phasenstromsignal $I_{mod}$ kann dann als Eingangssignal des Integrators 73 verwendet werden. Darin besteht der Vorteil, dass der Stromrippel auf die Nulllinie verschoben wird, ohne die Form des gefilterten Phasenstromsignals $I_{Filt}$, d. h. des Stromrippelverlaufs, zu verändern. Die Integration kann damit über der gesamten Pulsweitenmodulationsperiode des Stromrippels durchgeführt werden, wodurch die Genauigkeit maximiert werden kann.

Alternativ kann das gefilterte Phasenstromsignal gleichgerichtet werden, insbesondere mithilfe eines aktiven Gleichrichters, so dass alle negativen Anteile des gefilterten Phasenstromsignals an der Nulllinie gespiegelt werden. Dies ermöglicht ebenfalls eine Integration über die vollständige Pulsweitenmodulationsperiode.

Der Integrator 73 kann als rücksetzbarer Integrator ausgebildet und vorzugsweise als analoger Integrator implementiert sein. Die Integration liefert die Induktivitätsangabe L für die elektrische Maschine. Die Integrationszeitdauer und die Integrationsverstärkung sollten so gewählt sein, dass das Ergebnis der Integration möglichst genau digital ausgewertet werden kann. Die Integrationszeitdauer sollte entweder vollständig oder teilweise mindestens einem Stromänderungsabschnitt entsprechen, der ein Zeitfenster eines Anstiegs oder Abstiegs des betreffenden Phasenstroms auf einen Sprung der angelegten Phasenspannung entspricht. Eine erhöhte Messgenauigkeit und -sensitivität kann erreicht werden, indem vollständig über einen oder mehrere Stromänderungsabschnitte integriert wird, solange die Stromänderungsabschnitte dieselbe Induktivitätsinformation widerspiegeln. Dies kann auch zu einer Integration über eine vollständige Pulsweitenmodulationsperiode oder mehrere vollständige Pulsweitenmodulationsperioden erweitert werden.

Die Verstärkung des Integrators 73 kann abhängig von einer elektrischen Zeitkonstante der zu messenden Induktivität, der Pulsweitenmodulationsfrequenz und der nachfolgenden Signalelektronik ausgewählt werden. In aller Regel wird die Verstärkung solange optimiert, bis die maximale Eingangsspannung des nachfolgenden Analog-Digital-Wandlers erreicht ist. Damit wird maximale Messgenauigkeit, -auflösung und -sensitivität erreicht und damit der Informationsgehalt des zu messenden Signals erhöht.

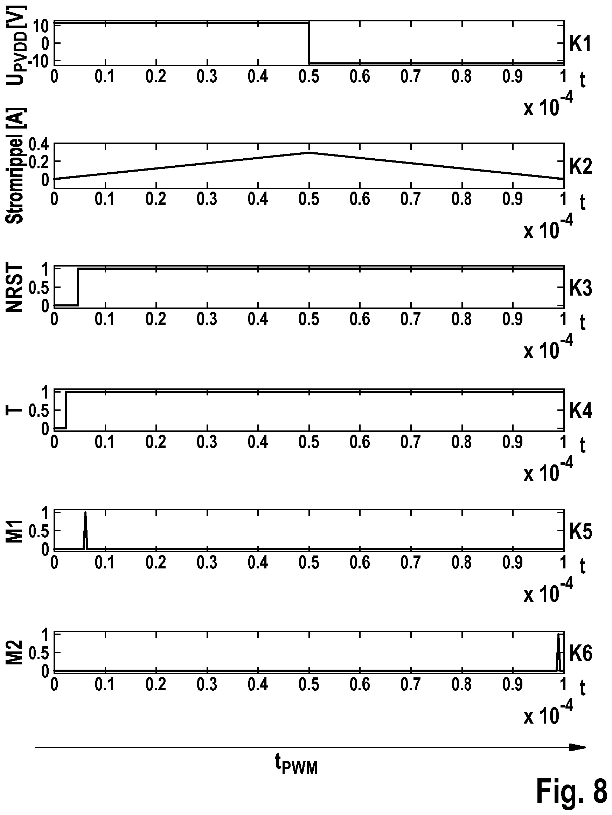

Beispielhafte Signalverläufe für die Auswerteeinheit 7 über eine Pulsweitenmodulationsperiode $t_{PWM}$ sind in Figur 8 dargestellt. Man erkennt in der ersten Kurve K1 den Verlauf der Phasenspannung entsprechend der Pulsweitenmodulation mit einem Tastverhältnis von beispielhaft dc=50%. Der resultierende Stromrippel ist in Kurve K2 dargestellt. Das invertierte Rücksetzsignal NRST des Integrators ist in Kurve K3 dargestellt. Wird eine Sample-and-Hold-Einheit für die Pegelanpassung verwendet, entspricht das Triggersignal T, das in Kurve K4 dargestellt wird, dem Halteeingang, der die Sample-and-Hold-Einheit 72a triggert. Dieses Triggern erfolgt mit einiger Verzögerung nach Beginn der Pulsweitenmodulation bzw. nach der ersten Flanke der Pulsweitenmodulation. Es gibt den Rücksetzeingang des Integrators nach dem Triggern der Sample-and-Hold-Einheit 72a mit etwas zusätzlicher Verzögerung frei. Schließlich entsprechen die Kurven K5 und K6 den zwei Messtriggern M1, M2, die das Abtasten und die Analog-/Digitalwandlung des erhaltenen integrierten Phasenstromsignals $I_{Int}$ messen. Die erste Messung wird dann von der zweiten Messung subtrahiert, um Mess-Offsets der verwendeten Schaltung zu eliminieren.

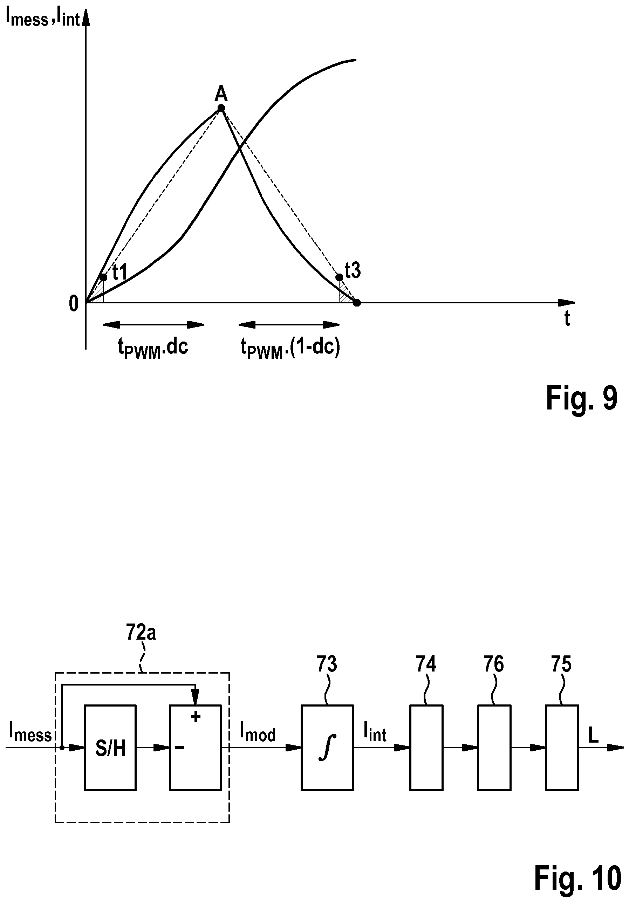

In Figur 9 ist ein resultierendes Integrationssignal für einen beispielhaften Stromrippel dargestellt. Man erkennt, dass aufgrund der Integration Rauschen auf dem modifizierten Phasenstromsignal $I_{mod}$ eliminiert wird. Dadurch ist dieses Verfahren im Vergleich zu herkömmlichen Ansätzen robust. Die funktionale Beschreibung des integrierten Phasenstromsignals $I_{Int}$ ist durch folgende Gleichungen gegeben:

$$I(t) = -\frac{1}{R} \cdot \left( e^{-\frac{R}{L}t} \left( L \cdot i_{DC} + \frac{L \cdot (U_{BEMF} - U_{PVDD})}{R} \right) + t \cdot (U_{BEMF} - U_{PVDD}) \right) \; for \; 0 \le t \le t_{PWM} \cdot dc$$

$$I(t) = -\frac{1}{R} \cdot \left( e^{-\frac{R}{L}(t - t_{pwm} \cdot dc)} \left( L \cdot i_A + \frac{L \cdot (U_{BEMF} + U_{PVDD})}{R} \right) + t \cdot (U_{BEMF} + U_{PVDD}) \right) \, for \, t_{PWM} \cdot dc \le t \le t_{PWM}$$

$$with \, i_A = i_{DC} + \left( \frac{U_{PVDD} - U_{BEMF}}{R} - i_{DC} \right) \cdot \left( 1 - e^{-\frac{R}{L} t_{pwm} \cdot dc} \right)$$

Das Verwenden dieser Gleichungen ist aufwendig, da der Einfluss der Gleichstromkomponente, des Spulenwiderstands und der Back-EMF-Spannung zu berücksichtigen ist. Durch die Verwendung des Hochpassfilters 71 in Verbindung mit der Pegelanpassung 72 wird die Gleichstromkomponente des Stromrippels vollständig entfernt, so dass der Stromrippel ohne Drift integriert werden kann. Zusätzlich werden die Back-EMF-Spannung und der Widerstandsanteil durch die Hochpassfilterung herausgefiltert. Den Wert des integrierten Phasenstromsignals kann man näherungsweise durch folgende Gleichung erhalten:

$$I = \frac{U_{PVDD}}{L} \cdot (1 - dc) \cdot dc \cdot t_{PWM}^2$$

woraus sich die Induktivitätsangabe L ergibt:

$$L = \frac{U_{PVDD}}{I} \cdot (1 - dc) \cdot dc \cdot t_{PWM}^2$$

Die Integration wird durch Messen der Werte am Ausgang des Integrators 73 zu den Zeitpunkten t1 und t3 durchgeführt und der Differenzwert aus den beiden gemessenen Werten zu den Zeitpunkten t3 und t1 ermittelt. Dadurch können Mess-Offsets eliminiert werden. Diese Abschätzung berücksichtigt jedoch nicht Verzögerungen beim Triggern der Sample-and-Hold-Einheit 72a des Integrators 73 oder Verzögerungen des Rücksetz-Mechanismus oder des Abtastens der Ausgänge des Integrators 73. Zum Eliminieren der Einflüsse dieser Verzögerungen werden die Zeitpunkte t1 und t3 jeweils mit einem Abstand vom Anfang bzw. Ende der Pulsweitenmodulationsperiode gewählt, beispielsweise zwischen 0 und 10%, insbesondere 5% nach dem Start der Integration und zwischen 0 und 10%, insbesondere 5% vor dem Ende der Integration. Bei Annahme eines Verzögerungsfaktors VF und eines Verkürzungsfaktors KF gilt für

$$t_1^* = VF \cdot t_{PWM} \quad t_2^* = dc \cdot t_{PWM} \quad t_3^* = KF \cdot t_{PWM}$$

mit

$$VF \le dc \le KF$$

Der Wert des abgetasteten integrierten Phasenstromsignals nimmt daher ab, da einige Teile des betrachteten Stromrippels nicht integriert werden. Das integrierte Phasenstromsignal, das sich unter Berücksichtigung der Verzögerungen ergibt, kann wie folgt berechnet werden:

$$I^* = \frac{1}{2} \cdot A \cdot t_{PWM} - \frac{1}{2 \cdot dc \cdot t_{PWM}} \cdot A \cdot t_1^{*2} - \frac{1 - \dfrac{t_3^* - dc \cdot t_{PWM}}{(1 - dc)t_{PWM}}}{2} \cdot A \cdot (t_{PWM} - t_3^*)$$

$$A = \frac{2 \cdot I^*}{t_{PWM} - \dfrac{t_1^{*2}}{t_{PWM} \cdot dc} - (1 - \dfrac{t_3^* - dc \cdot t_{PWM}}{(1 - dc)t_{PWM}})(t_{PWM} - t_3^*)}$$

$$L = \frac{2 \cdot U_{PVDD}}{2 \cdot I^*} \cdot (t_{PWM} - \frac{t_1^{*2}}{t_{PWM} \cdot dc} - (1 - \frac{t_3^* - dc \cdot t_{PWM}}{(1 - dc)t_{PWM}})(t_{PWM} - t_3^*)) \cdot dc \cdot (1 - dc) \cdot t_{PWM}$$

Das Integrieren des Phasenstromsignals, das den Stromrippel zur Schätzung der Induktivität repräsentiert, bietet eine erhebliche Verstärkung des Phasenstromsignals bei einer erheblichen Rauschunterdrückung. Dadurch können die Induktivitätsangabe L und daher eine daraus in an sich bekannter Weise zu ermittelnde Läuferlage mit hoher Genauigkeit bestimmt werden, sogar bei elektrischen Maschinen, die eine geringe Anisotropie aufweisen.

Da der Integrator 73 auch schwache Stromrippelsignale verstärkt, kann die elektrische Maschine 2 mit einer höheren Pulsweitenmodulationsfrequenz betrieben werden, was zu geringeren Betriebsgeräuschen und Drehmomentenschwankungen führt.

Darüber hinaus sind keine Überabtastungen von Strommessungen notwendig, da ein analoger Integrator verwendet werden kann, der lediglich zweimal pro Pulsweitenmodulationsperiode abgetastet werden muss. Dies erlaubt, die Auswerteeinheit 7 mit einfachen Analog-/Digitalwandlern zu betreiben, wodurch der Gesamtaufwand für eine solche Schaltung sinkt.

Figur 10 zeigt eine alternative Ausführungsform einer Auswerteschaltung, die zudem eine Ermittlung einer Widerstandsangabe ermöglicht. Die Widerstandsangabe entspricht einer Summe aus dem ohmschen Widerstand und einer Back-EMF, die bei reluktanzbasierten Aktoren proportional zum Strom ist und sich damit wie ein zusätzlicher Widerstand verhält. Durch die Bestimmung der Widerstandsangabe kann die Induktivitätsangabe wie nachfolgend beschrieben korrigiert werden.

Die Ausführungsform, die in Figur 10 schematisch dargestellt ist, weist eine Auswerteschaltung ohne eingangsseitige Hochpassfilterung auf, d.h. das Phasenstromsignal, das den Stromrippel zur Schätzung der Induktivität repräsentiert, wird direkt an die Pegelanpassung angelegt, die in Form einer Sample-and-Hold-Einheit 72a ausgebildet sein kann.

Das Sample-and-Hold-Einheit 72a generiert das modifizierte Phasenstromsignal $I_{mod}$, das dem Integrator 73 zugeführt wird.

$$i_{mod} = i - i_1 = \frac{u - L \cdot \dfrac{di}{dt}}{D} - i_1$$

Der Integrator 73 integriert im Wesentlichen über die zuvor beschriebene Integrationszeitdauer, wobei im Unterschied zu dem oben beschriebenen Verfahren eine Abtastung des Integrationswerts zu dem Zeitpunkt $t_2 = t_{pwm} \cdot dc$ erfolgen muss.

Dadurch kann die Widerstandsangabe D bestimmt werden, der zur Korrektur der Induktivitätsangabe verwendet werden kann.

Zu den Messzeitpunkten $t_2 = t_{pwm} \cdot dc$ und $t_3 = t_{pwm}$ erhält man folgende Messwerte am Ausgang der Integrationsstufe:

$$I_2 = \frac{U_{PVDD}}{D}(t_2 - t_1) - \frac{L}{D}(i_2 - i_1) - i_1(t_2 - t_1)$$

$$I_3 = I_2 + \frac{-U_{PVDD}}{D}(t_3 - t_2) - \frac{L}{D}(i_3 - i_2) - i_1(t_3 - t_2)$$

Umgeformt ergibt sich:

$$D = \frac{\alpha U_{PVDD}(t_2 - t_1) + U_{PVDD}(t_3 - t_2)}{\alpha A - B}$$

$$L = \frac{U_{PVDD}(t_2 - t_1) - A \cdot D}{i_2 - i_1}$$

mit

$$A = I_2 + i_1 \cdot (t_2 - t_1) = \frac{U_{PVDD}(t_2 - t_1) - L(i_2 - i_1)}{D}$$

$$B = I_3 - I_2 + i_1 \cdot (t_3 - t_2) = \frac{-U_{PVDD}(t_3 - t_2) - L(i_3 - i_2)}{D}$$

$$\alpha = \frac{i_3 - i_2}{i_2 - i_1}$$

Durch die Berücksichtigung der Widerstandsangabe kann die zu ermittelnde Induktivitätsangabe L auch bei einer erhöhten Dynamik bestimmt werden. Weiterhin ist die Bandbreite der ermittelten Induktivitätsangabe erhöht, da auf eine eingangsseitige Hochpassfilterung verzichtet werden kann. Insbesondere ist keine Annäherung des Stromrippels an einen linearen Verlauf notwendig, da die Widerstandsangabe berücksichtigt wird.

Wenn kein Gleichstrom angelegt ist ($i_{DC}$ = 0), dann ist keine Ermittlung des Widerstands D und damit von L möglich. In diesem Fall muss eine vorherige Messung von D angenommen werden oder explizit für kurze Zeit ein Strom ($i_{DC} \neq 0$) angelegt werden.

Das Integratorsignal wird wie oben beschrieben dem Summierblock 74 zugeführt. Nachfolgend wird der Ausgang des Summierblocks 74, der einen stets positiven Wert des integrierten Phasenstromsignals $I_{int}$ sicherstellt, zur Berechnung der Induktionsangabe L und ggfs. der Widerstandsangabe D in einer dem Summierblock 74 nachgelagerten Berechnungseinheit 76 durchgeführt. Die Berechnungseinheit 76 erhält die Integrationswerte zu den Zeitpunkten $t_2$ und $t_3$, wobei erst nach Empfangen des Integrationswerts zu dem Zeitpunkt $t_3$ der Integrator 73 zurückgesetzt wird.

## Patentansprüche

1. Verfahren zum Ermitteln einer Läuferlage eines Läufers einer elektronisch kommutierten elektrischen Maschine (1) als ein elektromagnetischer Aktuator abhängig von einer ermittelten Induktivitätsangabe (L), wobei die Induktivitätsangabe (L) des elektromagnetischen Aktuators (1) ermittelt wird mit folgenden Schritten:

   - Betreiben des elektromagnetischen Aktuators (1) durch Anlegen mindestens eines pulsweitenmodulierten Ansteuersignals an mindestens einem Phasenstrang (21) des elektromagnetischen Aktuators (1);
   - Erfassen einer resultierenden Phasenstromangabe ($I_{mess}$), die einen Verlauf eines Phasenstroms durch den mindestens einen Phasenstrang (21) angibt;

   charakterisiert durch den weiteren Schritt:

   - Durchführen einer analogen Integration abhängig von der Phasenstromangabe ($I_{mess}$) über eine vorgegebene Integrationszeitdauer, um die Induktivitätsangabe (L) zu erhalten, die eine momentane Induktivität des elektromagnetischen Aktuators (1) angibt.

2. Verfahren nach Anspruch 1, wobei das Durchführen einer Integration umfasst:

   - Filtern der erfassten Phasenstromangabe ($I_{mess}$), um ein Stromrippelsignal zu erhalten; und
   - Integrieren des Stromrippelsignals über die vorgegebene Integrationszeitdauer, um die Induktivitätsangabe (L) zu erhalten.

**3.** Verfahren nach Anspruch 2, wobei das Stromrippelsignal vor der Integration so modifiziert wird, insbesondere durch eine Pegelwandlung, dass bei dem Integrieren kein Gleichanteil integriert wird.

**4.** Verfahren nach einem der Ansprüche 1 bis 3, wobei die vorgegebene Integrationszeitdauer vollständig oder teilweise einem oder mehreren Stromänderungsabschnitten entspricht, die jeweils ein Zeitfenster eines Anstiegs oder Abfalls des Phasenstroms als Reaktion auf einen Sprung der angelegten Phasenspannung entsprechen.

**5.** Verfahren nach einem der Ansprüche 1 bis 4, wobei die Integrationszeitdauer einer Pulsweitenmodulationsperiode entspricht oder von dieser abhängt und insbesondere zu einem Zeitpunkt zwischen 0% bis 10% der Pulsweitenmodulationsperiode nach dem Beginn der Pulsweitenmodulationsperiode beginnt und/oder zu einem Zeitpunkt zwischen 0% bis 10% der Pulsweitenmodulationsperiode vor dem Ende der Pulsweitenmodulationsperiode endet.

**6.** Verfahren nach einem der Ansprüche 1 bis 5, wobei eine Widerstandsangabe mithilfe eines Integrationswerts zu einem Zeitpunkt eines Übergangs zwischen zwei Stromänderungsabschnitten und einem Integrationswert zu einem Ende der Integrationszeitdauer ermittelt wird, wobei die Stromänderungsabschnitte jeweils ein Zeitfenster innerhalb eines Anstiegs oder Abfalls des Phasenstroms als Reaktion auf einen Sprung der angelegten Phasenspannung, insbesondere innerhalb einer Pulsweitenmodulationsperiode, umfassen.

**7.** Verfahren nach Anspruch 6, wobei die Induktionsangabe durch die Widerstandsangabe des elektromagnetischen Aktuators (1) korrigiert wird.

**8.** Verfahren nach Anspruch 1, wobei das Ermitteln einer momentanen Läuferlage der elektrischen Maschine abhängig von der Induktivitätsangabe (L) mithilfe einer Zuordnungsfunktion erfolgt.

**9.** Verfahren nach einem der Ansprüche 1 bis 8, wobei das Erfassen der Phasenstromangabe ($I_{mess}$) mithilfe eines Messwiderstands (51) durchgeführt wird, wobei eine über dem mindestens einen Messwiderstand (51) abfallende Messspannung als Phasenstromangabe ($I_{mess}$) verwendet wird, wobei der Messwiderstand (51) angeordnet ist:

- in Reihe mit dem mindestens einen Phasenstrang (21);
- in Reihe mit einem Brückenzweig einer den betreffenden Phasenstrang (21) treibenden Leistungstreiberschaltung (3), oder
- zwischen einer den betreffenden Phasenstrang (21) treibenden Leistungstreiberschaltung (3) und einem Versorgungspotenzial, insbesondere einem niedrigen Versorgungspotenzial.

**10.** Auswerteeinheit zum Ermitteln einer Läuferlage eines Läufers einer elektronisch kommutierten elektrischen Maschine (1) als ein elektromagnetischer Aktuator abhängig von einer ermittelten Induktivitätsangabe (L), dadurch charakterisiert, dass die Auswerteeinheit umfasst:

- einen analogen Integrator (73), der ausgebildet ist, um eine analoge Integration abhängig von einer Phasenstromangabe ($I_{mess}$) über eine vorgegebene Integrationszeitdauer durchzuführen, so dass eine Induktivitätsangabe (L) erhalten wird, die eine momentane Induktivität des elektromagnetischen Aktuators (1) angibt, wobei die Phasenstromangabe ($I_{mess}$) einen Verlauf des Phasenstroms durch mindestens einen Phasenstrang (21) bei einer Ansteuerung des mindestens einen Phasenstrangs (21) mit einem pulsweitenmodulierten Ansteuersignal angibt.

**11.** Auswerteeinheit nach Anspruch 10 mit einem Zuordnungsblock, der ausgebildet ist, um eine momentane Läuferlage des elektromagnetischen Aktuators (1) abhängig von der Induktivitätsangabe (L) zu ermitteln.

**12.** Auswerteeinheit nach Anspruch 10 oder 11 mit einem Hochpassfilter (71), der ausgebildet ist, um die Phasenstromangabe zu filtern, so dass ein Anteil eines mittleren Phasenstroms herausgefiltert wird.

**13.** Auswerteeinheit nach einem der Ansprüche 10 bis 12 mit einem Pegelanpassungsblock (72), der ausgebildet ist, um vor der Integration eine Pegelanpassung durchzuführen.

**Claims**

**1.** A method for determining a rotor position of a rotor of an electrically commutated electrical machine (1) as an electromagnetic actuator depending on a determined inductance indication (L), wherein the inductance indication (L) of the electromagnetic actuator (1) is determined with the following steps:

- operating the electromagnetic actuator (1) by applying at least one pulse-width modulated control signal to at least one phase strand (21) of the electromagnetic actuator (1);
- detecting a resulting phase current indication (Imess) indicating a characteristics of a phase current through the at least one phase strand (21);
**characterized by** the further step of
- performing an analog integration depending on the phase current indication (Imess) over a predetermined integration time period to obtain the inductance indication (L) indicating an actual inductance of the electromagnetic actuator (1).

2. The method according to claim 1, wherein performing integration comprises:

- filtering the detected phase current indication (Imess) to obtain a current ripple signal; and
- integrating the current ripple signal over the predetermined integration time period to obtain the inductance indication (L).

3. The method according to claim 2, wherein the current ripple signal is modified before integration, in particular by a level conversion, in such a way that no DC component is integrated during the integration.

4. The method according to any one of claims 1 to 3, wherein the predetermined integration time period fully or partially corresponds to one or more current change sections, each corresponding to a time window of a rise or fall of the phase current in response to a step change of the applied phase voltage.

5. The method according to any one of claims 1 to 4, wherein the integration time period corresponds to or depends on a pulse width modulation period and in particular starts at a time between 0% to 10% of the pulse width modulation period after the start of the pulse width modulation period and/or ends at a time between 0% to 10% of the pulse width modulation period before the end of the pulse width modulation period.

6. The method according to any one of claims 1 to 5, wherein a resistance indication is determined by means of an integration value at a point in time of a transition between two current change sections and an integration value at an end of the integration period, wherein the current change sections each comprise a time window within a rise or fall of the phase current in response to a step change of the applied phase voltage, in particular within a pulse width modulation period.

7. The method according to claim 6, wherein the inductance indication is corrected by the resistance indication of the electromagnetic actuator (1).

8. The method according to claim 1, wherein determining an instantaneous rotor position of the electric machine depending on the inductance indication (L) is performed using an assignment function.

9. The method according to any one of claims 1 to 8, wherein detecting the phase current indication (Imess) is carried out by means of a measuring resistor (51), wherein a measuring voltage dropping across the at least one measuring resistor (51) is used as the phase current indication (Imess), wherein the measuring resistor (51) is arranged

- in series with the at least one phase strand (21);
- in series with a bridge branch of a power driver circuit (3) driving the corresponding phase strand (21); or
- between a power driver circuit (3) driving the corresponding phase strand (21) and a supply potential, in particular a low supply potential.

10. An evaluation unit for determining a rotor position of a rotor of an electrically commutated electrical machine (1) as an electromagnetic actuator depending on a determined inductance indication (L); **characterized in that** the evaluation unit comprises:

- an analog integrator (73) which is configured to perform analog integration depending on a phase current indication (Imess) over a predetermined integration time period, so that an inductance indication (L) is obtained which indicates an actual inductance of the electromagnetic actuator (1), the phase current indication (Imess)

EP 3 544 173 B1

indicating a characteristics of the phase current through at least one phase strand (21) when the at least one phase strand (21) is driven with a pulse-width-modulated control signal.

11. The evaluation unit according to claim 10 with an allocation block which is configured to determine an actual rotor position of the electromagnetic actuator (1) depending on the inductance indication (L).

12. The evaluation unit according to claim 10 or 11 with a high-pass filter (71) which is configured to filter the phase current indication so that a portion of an average phase current is filtered out.

13. The evaluation unit according to any one of claims 10 to 12 with a level adjustment block (72) which is configured to perform a level adjustment before integration.

**Revendications**

1. Procédé de détermination d'une position de rotor d'un rotor d'une machine électrique à commutation électronique (1) en tant qu'actionneur électromagnétique en fonction d'une indication d'inductance (L) déterminée, l'indication d'inductance (L) de l'actionneur électromagnétique (1) étant déterminée selon les étapes suivantes :

   - mise en fonctionnement de l'actionneur électromagnétique (1) en appliquant au moins un signal de commande modulé en largeur d'impulsion à au moins un conducteur de phase (21) de l'actionneur électromagnétique (1) ;
   - détection d'une indication de courant de phase ($I_{mess}$) résultante, laquelle indique un parcours d'un courant de phase à travers l'au moins un conducteur de phase (21) ;

   **caractérisé par** l'étape supplémentaire de :

   - réalisation d'une intégration analogique en fonction de l'indication de courant de phase ($I_{mess}$) pendant une durée d'intégration prédéterminée afin d'obtenir l'indication d'inductance (L), laquelle indique une inductance actuelle de l'actionneur électromagnétique (1).

2. Procédé selon la revendication 1, dans lequel la réalisation d'une intégration comprend :

   - le filtrage de l'indication de courant de phase ($I_{mess}$) détectée afin d'obtenir un signal d'ondulation de courant ; et
   - l'intégration du signal d'ondulation de courant pendant la durée d'intégration prédéterminée afin d'obtenir l'indication d'inductance (L).

3. Procédé selon la revendication 2, dans lequel le signal d'ondulation de courant est modifié avant l'intégration, en particulier par conversion de niveau, de telle sorte qu'aucune composante continue n'est intégrée lors de l'intégration.

4. Procédé selon l'une des revendications 1 à 3, dans lequel la durée d'intégration prédéterminée correspond entièrement ou partiellement à une ou plusieurs sections de changement de courant, lesquelles correspondent respectivement à une fenêtre temporelle d'une augmentation ou d'une diminution du courant de phase en réponse à un saut de la tension de phase appliquée.

5. Procédé selon l'une des revendications 1 à 4, dans lequel la durée d'intégration correspond à ou dépend d'une période de modulation de largeur d'impulsion et commence en particulier à un moment compris entre 0 % et 10 % de la période de modulation de largeur d'impulsion après le début de la période de modulation de largeur d'impulsion et/ou se termine à un moment compris entre 0 % et 10 % de la période de modulation de largeur d'impulsion avant la fin de la période de modulation de largeur d'impulsion.

6. Procédé selon l'une des revendications 1 à 5, dans lequel une indication de résistance est déterminée à l'aide d'une valeur d'intégration à un moment d'une transition entre deux sections de changement de courant et une valeur d'intégration à la fin de la durée d'intégration, les sections de changement de courant comprenant respectivement une fenêtre temporelle au cours d'une augmentation ou d'une diminution du courant de phase en réponse à un saut de la tension de phase appliquée, en particulier au cours d'une période de modulation de largeur d'impulsion.

7. Procédé selon la revendication 6, dans lequel l'indication d'inductance est corrigée par l'indication de résistance de l'actionneur électromagnétique (1).

8. Procédé selon la revendication 1, dans lequel la détermination d'une position de rotor actuelle de la machine électrique s'effectue en fonction de l'indication d'inductance (L) à l'aide d'une fonction d'affectation.

9. Procédé selon l'une des revendications 1 à 8, dans lequel la détection de l'indication de courant de phase ($I_{mess}$) est réalisée à l'aide d'une résistance de mesure (51), une tension de mesure chutant aux bornes de l'au moins une résistance de mesure (51) étant utilisée comme indication de courant de phase ($I_{mess}$), la résistance de mesure (51) étant agencée :

- en série avec l'au moins un conducteur de phase (21) ;
- en série avec une branche de pont d'un circuit d'entraînement de puissance (3) entraînant le conducteur de phase (21) concerné, ou
- entre un circuit d'entraînement de puissance (3) entraînant le conducteur de phase (21) concerné et un potentiel d'alimentation, en particulier un potentiel d'alimentation faible.

10. Unité d'évaluation permettant de déterminer une position de rotor d'un rotor d'une machine électrique à commutation électronique (1) en tant qu'actionneur électromagnétique en fonction d'une indication d'inductance (L) déterminée, **caractérisée en ce que** l'unité d'évaluation comprend :

- un intégrateur analogique (73) qui est configuré pour réaliser une intégration analogique en fonction d'une indication de courant de phase ($I_{mess}$) pendant une durée d'intégration prédéterminée, de sorte qu'une indication d'inductance (L) est obtenue, laquelle indique une inductance actuelle de l'actionneur électromagnétique (1), l'indication de courant de phase ($I_{mess}$) indiquant un parcours du courant de phase à travers au moins un conducteur de phase (21) lorsque l'au moins un conducteur de phase (21) est commandé avec un signal de commande modulé en largeur d'impulsion.

11. Unité d'évaluation selon la revendication 10, comportant un bloc d'affectation qui est configuré pour déterminer une position de rotor actuelle de l'actionneur électromagnétique (1) en fonction de l'indication d'inductance (L).

12. Unité d'évaluation selon la revendication 10 ou 11, comportant un filtre passe-haut (71) qui est configuré pour filtrer l'indication de courant de phase de sorte qu'une partie d'un courant de phase moyen est extraite par filtrage.

13. Unité d'évaluation selon l'une des revendications 10 à 12, comportant un bloc d'adaptation de niveau (72) qui est configuré pour réaliser une adaptation de niveau avant l'intégration.

Fig. 1

Fig. 2

Fig. 3

EP 3 544 173 B1

Fig. 4

Fig. 5

18

Fig. 6

Fig. 7

Fig. 8

$I_{mess}, I_{int}$

A

t1

t3

0

t

$t_{PWM} \cdot dc$        $t_{PWM} \cdot (1-dc)$

Fig. 9

72a

$I_{mess}$    S/H    +    $I_{mod}$    $\int$    $I_{int}$    L
              −         73    74    76    75

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008064380 A1

**In der Beschreibung aufgeführte Nicht-Patentliteratur**

- **WANG, C. ; XU, L.** A Novel Approach for Sensorless Control of PM Machines Down to Zero Speed Without Signal Injection or Special PWM Technique. *IEEE Transactions on Power Electronics,* 2004
- **PAULUS, D. ; LANDSMANN, P. ; KENNEL, R.** Saliency based Sensorless Field- oriented Control for Permanent Magnet Synchronous Machines in the Whole Speed Range. *Sensorless Control for Electrical Drives,* 2012
- **AHMED S. ; DOAN V.-D. ; KOSEKI T.** Electromagnetic Levitation Control with Sensorless Large Air Gap Detection for Translational Motion Application Using Measured Current-Ripple Slope. *Industrial Electronics Society (IECON),* 2016
- Soft Landing and Self-Sensing Strategies for Electromagnetic Actuators. **GLÜCK, T.** Dissertation. Shaker Verlag, 2013